# EUROPEAN PATENT SPECIFICATION

(11) **EP 2 768 069 B1**
(45) Date of publication and mention of the grant of the patent: **03.06.2015**
(21) Application number: 13180820.6
(22) Date of filing: 19.08.2013
(51) Int. Cl.: H01M 10/42, H01M 2/10, H01M 2/12, H01M 10/04, H01M 2/34

(54) **Battery module**
Batteriemodul
Module de batterie

(30) Priority: 14.02.2013 US 201361764872 P; 13.08.2013 US 201313966017
(43) Date of publication of application: 20.08.2014
(73) Proprietor: Samsung SDI Co., Ltd., Gyeonggi-do (KR)
(72) Inventor: Han, Min-Yeol, Yongin-si, Gyeonggi-do (KR); Byun, Sang-Won, Yongin-si, Gyeonggi-do (KR); Kim, Jin-Seop, Yongin-si, Gyeonggi-do (KR); Yoon, Su-Jin, ChoongchungNam-do (KR)
(74) Representative: Gulde & Partner

(56) References cited:
- EP-A1- 2 226 868
- EP-A1- 2 461 393
- US-A1- 2013 029 191

## Description

### FIELD OF THE INVENTION

The described technology relates generally to a battery module for improving safety.

### DESCRIPTION OF THE RELATED ART

Unlike a primary battery that cannot be recharged, a rechargeable battery may be repeatedly charged and discharged. A small-capacity rechargeable battery is used for small portable electronic devices such as mobile phones, notebook computers, camcorders, and the like, while a large-capacity rechargeable battery is used as a motor-driving power source for hybrid vehicles and electric vehicles.

The rechargeable battery may be used in small electronic devices as a single-cell battery or in a motor-driving power source, etc. as a battery module where a plurality of cells is electrically connected. The battery module is formed by connecting electrode terminals through a bus bar.

The rechargeable battery may explode or ignite when an abnormal reaction occurs to increase the pressure in the case because of an overcharge when the battery module is charged and discharged.

EP 2 226 868 describes a battery module wherein each cell comprises a pressure switch on its side wall.

US2013029191 and EP2451393 disclose batteries comprising a pressure switch on the cover, wherein a deformable plate changes from concave to convex with pressure and contacts a short-circuit tab.

### SUMMARY

The described technology has been made in an effort to provide a battery module for improving safety when an internal pressure of a battery is increased in a battery module.

An exemplary embodiment provides a rechargeable battery module comprising at least one battery cell comprising an electrode assembly having a first electrode and a second electrode, a case for accommodating the electrode assembly therein, a cap plate for closing an opening of the case, a short circuit connector provided being electrically connected to the first electrode of the battery cell, and a short circuit member electrically connected to the second electrode and provided on a side surface of the case, the short circuit member having a first state being spaced apart from the short circuit connector and a second state being in contact with the short circuit connector. The short circuit connector is provided with a cutout extending from the bottom of the short circuit connector.

According to an exemplary embodiment, the short circuit member and its connection part with the short circuit connector having the cutout is provided on the side of the case to prevent moisture from being condensed on a surface of the short circuit member. Also, a the short circuit connector, preferably in the form of a module frame electrically contacting the short circuit member is provided and installed in the direction of gravity to prevent the short circuit connector and the short circuit member from being erroneously contacted by the condensed moisture between the short circuit member and the short circuit connector.

The short circuit connector comprises a conductor and an insulating layer wrapping the conductor. The insulating wrapping prevents accidental electrical connection of the short circuit connector and the battery case.

The cutout exposes a part of the conductor. Through this, moisture condensed on the exposed conductor can be guided along the cutout away from the short circuit member.

The short circuit connector preferably further comprises an opening exposing the conductor on a side and location of the short circuit connector facing the short circuit member. Through this opening, the short circuit member can contact the conductor in the short circuit connector.

The cutout preferably extends towards the opening. In one embodiment, the cutout and the opening are connected with each other such that also moisture from the opening can be guide along the cutout.

The short circuit connector may further comprise a short circuit protrusion of the conductor protruding through the opening towards the short circuit member. This allows a short to be formed more rapidly since the distance between the conductor and the short circuit member is decreased.

In one embodiment, the short circuit connector further comprises a support protrusion formed on a side of the short circuit connector facing the battery cell to separate the short circuit protrusion from the battery cell. In this way, an accidental connection of the battery case and the short circuit connector can be prevented.

In another embodiment, a plurality of battery cells is provided, the battery cells being stacked along a first direction, wherein the short circuit connector surrounds the plurality of battery cells and is electrically connected to an outermost battery cell. In this way, easy and improved short circuiting of a battery module with a plurality of battery cells can be provided.

According to the invention, the side surface of the case being provided with the short circuit member has a normal perpendicular to the first direction and can thus be easily contacted by the short circuit connector. Preferably, the side surface of the case being provided with the short circuit member has a normal perpendicular to the normal of the cap plate.

The short circuit connector is located on an exterior surface of the battery cells facing the short circuit members of each of the battery cells. Through this, moisture condensed on the short circuit connector can be guided away from the battery cell and the short circuit member.

The short circuit connector preferably has the shape of a rectangular frame, extending in a plane parallel to the cap plates of the plurality of battery cells.

Preferably, the short circuit member is in communication with the inside of its case. It may have a plate shape with a flat edge and a curved portion protruding towards the interior of the case. The short circuit member may be installed in a short circuit hole provided in the respective side surface of the case, the short circuit hole being preferably surrounded by a groove and the flat edge of the short circuit member is inserted into the groove.

### BRIEF DESCRIPTION OF THE DRAWINGS

FIG. 1 is a perspective view of a battery module according to a first exemplary embodiment of the present invention.
FIG. 2 is a perspective view of a rechargeable battery according to a first exemplary embodiment of the present invention.
FIG. 3 is a cross-sectional view with respect to a line III-III in FIG. 1.
FIG. 4 is a perspective view of a module frame according to a first exemplary embodiment of the present invention.
FIG. 5A is a circuit diagram of a battery module according to a first exemplary embodiment of the present invention, and FIG. 5B is a circuit diagram when a short circuit member electrically contacts a module frame in a battery module according to a first exemplary embodiment of the present invention.
FIG. 6 is a cross-sectional view of a battery module according to a second exemplary embodiment of the present invention.
FIG. 7 is a partial perspective view of a negative electrode lead tab according to a second exemplary embodiment of the present invention.
FIG. 8 is a partial perspective view of a positive electrode lead tab according to a second exemplary embodiment of the present invention.
FIG. 9 is a perspective view of a module frame according to a second exemplary embodiment of the present invention.
FIG. 10 is a cross-sectional view of a battery module according to a third exemplary embodiment of the present invention.
FIG. 11 is a perspective view of a module frame according to a third exemplary embodiment of the present invention.
FIG. 12 is a perspective view of a module frame according to a fourth exemplary embodiment of the present invention.
FIG. 13 is a cross-sectional view of a battery module according to a fourth exemplary embodiment of the present invention.
Fig. 14 is a perspective view of a short circuit connection member according to a fifth exemplary embodiment of the present invention.
FIG. 15 is a cross-sectional view of a battery module according to a fifth exemplary embodiment of the present invention.
Fig. 16 is a perspective view of a short circuit connection member according to a sixth exemplary embodiment of the present invention.

### DETAILED DESCRIPTION

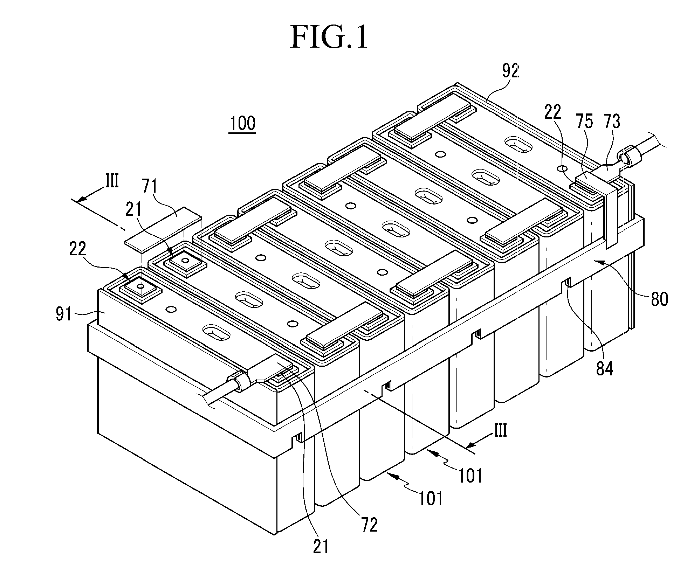

FIG. 1 is a perspective view of a battery module according to a first exemplary embodiment of the present invention.

Referring to FIG. 1, the battery module 100 includes a plurality of rechargeable batteries 101, a bus bar 71 for electrically connecting a first electrode terminal 21 and a second electrode terminal 22 of the neighboring rechargeable batteries 101, and a short circuit connection member 80, which may also be referred to in the following as a module frame 80 for surrounding external circumferences of the rechargeable batteries 101.

The rechargeable batteries 101 are arranged to be stacked along a first direction, the rechargeable batteries 101 include first electrode terminals 21 and second electrode terminals 22, and when the first electrode terminals 21 and the second electrode terminals 22 are alternately disposed, the bus bar 71 is welded to be combined to the terminals to couple the rechargeable batteries 101 in series.

A first module terminal 72 for drawing out a current is installed in the first electrode terminal 21 of the rechargeable battery 101 disposed on a side end of a first end from among the stacked rechargeable batteries 101, and a second module terminal 73 for drawing out the current is installed in the second electrode terminal 22 of the rechargeable battery disposed on a side end of a second end.

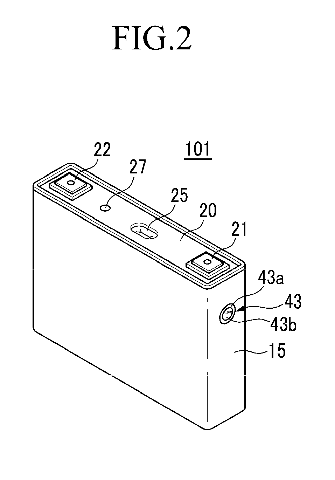

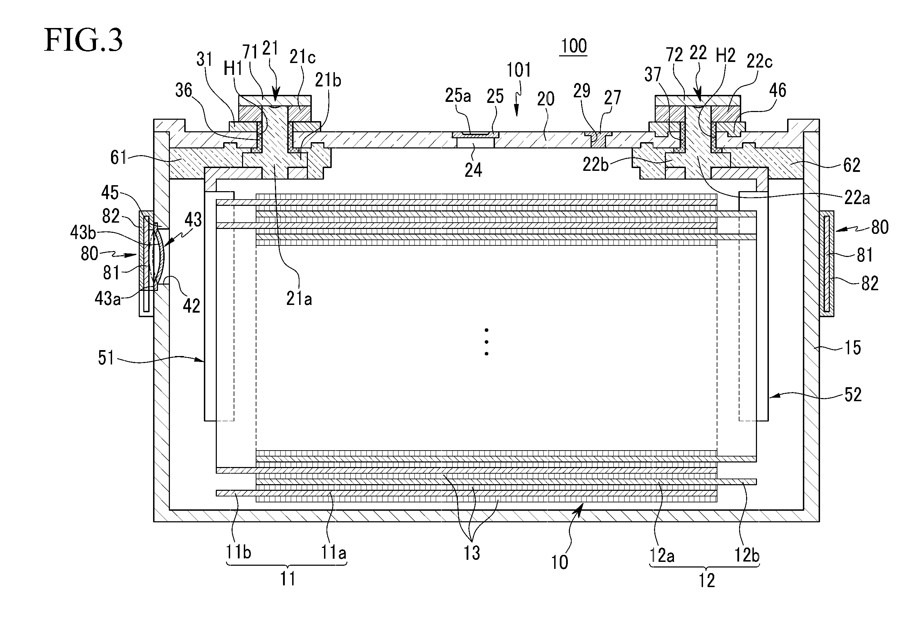

FIG. 2 is a perspective view of a rechargeable battery according to a first exemplary embodiment of the present invention, and FIG. 3 is a cross-sectional view with respect to a line III-III in FIG. 1.

Referring to FIG. 2 and FIG. 3, the rechargeable battery 101 includes or accommodates a electrode assembly 10 for charging and discharging the current, a case 15 including the electrode assembly 10, a cap plate 20 combined to an opening of the case 15, and a first electrode terminal (negative terminal) 21 and a second electrode terminal (positive electrode terminal) 22 installed in the cap plate 20.

For example, the electrode assembly 10 is formed when a first electrode (hereinafter, a negative electrode) 11 and a second electrode (hereinafter, a positive electrode) 12 are disposed on both sides of a separator 13, which is an insulator, and the negative electrode 11, the separator 13, and the positive electrode 12 are spirally wound in a jellyroll state.

The negative electrode 11 and the positive electrode 12 include coated regions 11a and 12a that are formed by applying an active material to a current collector on a metal plate and uncoated regions 11b and 12b that are formed to be exposed current collectors without application of the active material thereto.

The uncoated region 11b of the negative electrode 11 is formed at an end of the negative electrode 11 along the spirally wound negative electrode 11. The uncoated region 12b of the positive electrode 12 is formed at an end of the positive electrode 12 along the spirally wound positive electrode 12. The uncoated regions 11 b and 12b are disposed on both ends of the electrode assembly 10.

For example, the case 15 is formed to be cuboidal so as to set a space for receiving the electrode assembly 10 and an electrolyte solution therein, and an opening for connecting an outside and the inner space on one side of the cuboid. The opening allows the electrode assembly 10 to be inserted inside the case 15.

The cap plate 20 is installed in the opening of the case 15 to close and seal the case 15. For example, the case 15 and the cap plate 20 can be made of aluminum and be welded to each other.

Also, the cap plate 20 includes an electrolyte injection opening 29, a vent hole 24, and terminal holes H1 and H2. The electrolyte injection opening 29 communicates the outside of the cap plate 20 and the inside of the case 15 to allow the electrolyte solution to be injected into the case 15. When the electrolyte solution is injected, the electrolyte injection opening 29 is sealed with a sealing stopper 27.

The vent hole 24 is closed and sealed by a vent plate 25 so as to discharge an internal pressure of a rechargeable battery 101. When the internal pressure of the rechargeable battery 101 reaches a predetermined pressure, the vent plate 25 is incised to open the vent hole 24. The vent plate 25 includes a notch 25a for generating an incision.

The first electrode terminal 21 and the second electrode terminal 22 are installed in the terminal holes H1 and H2 of the cap plate 20 and are electrically connected to the electrode assembly 10. That is, the first electrode terminal 21 is electrically connected to the negative electrode 11 of the electrode assembly 10, and the second electrode terminal 22 is electrically connected to the positive electrode 12 of the electrode assembly 10. Therefore, the electrode assembly 10 is drawn out to the outside of the case 15 through the first electrode terminal 21 and the second electrode terminal 22.

The first electrode terminal 21 and the second electrode terminal 22 form the same configuration inside the cap plate 20 and protrude through the cap plate 20, and they form different configurations outside the cap plate 20, which will now be described.

The first and second electrode terminals 21 and 22 include rivet terminals 21a and 22a installed in the terminal holes H1 and H2 of the cap plate 20, flanges 21b and 22b widely formed as a single body on the rivet terminals 21a and 22a inside the cap plate 20, and plate terminals 21c and 22c disposed outside the cap plate 20 and connected to the rivet terminals 21a and 22a through riveting or welding.

Negative and positive electrode gaskets 36 and 37 are installed between the rivet terminals 21a and 22a of the first and second electrode terminals 21 and 22 and the insides of the terminal holes H1 and H2 of the cap plate 20 to seal and electrically insulate a space between the rivet terminals 21a and 22a of the first and second electrode terminals 21 and 22 and the cap plate 20.

The negative and positive electrode gaskets 36 and 37 are extended to be installed between the flanges 21b and 22b and the inside of the cap plate 20 to further seal and electrically insulate the space between the flanges 21b and 22b and the cap plate 20. That is, the negative and positive electrode gaskets 36 and 37 prevent an electrolyte solution from being leaked through the terminal holes H1 and H2 by installing the first and second electrode terminals 21 and 22 in the cap plate 20.

Negative and positive electrode lead tabs 51 and 52 electrically connect the first and second electrode terminals 21 and 22 to the negative and positive electrodes 11 and 12 of the electrode assembly 10. That is, the negative and positive electrode lead tabs 51 and 52 are combined to bottoms of the rivet terminals 21a and 22a and the bottoms are caulked so that the negative and positive electrode lead tabs 51 and 52 are supported by the flanges 21b and 22b and are connected to the rivet terminals 21a and 22a.

Negative and positive electrode insulating members 61 and 62 are installed between the negative and positive electrode lead tabs 51 and 52 and the cap plate 20 to electrically insulate the negative and positive electrode lead tabs 51 and 52 from the cap plate 20. Further, the negative and positive electrode insulating members 61 and 62 are combined to the cap plate 20 on a first end and wrap the negative and positive electrode lead tabs 51 and 52, the rivet terminals 21a and 22a, and the flanges 21b and 22b thereby stabilizing their connection structure.

The plate terminal 21c of the first electrode terminal 21 is electrically connected to the rivet terminal 21a to provide an insulating member 31 and it is then disposed outside the cap plate 20.

The insulating member 31 is installed between the plate terminal 21c and the cap plate 20 to electrically insulate the plate terminal 21c and the cap plate 20. That is, the cap plate 20 maintains electrical insulation from the first electrode terminal 21.

A top plate 46 of the second electrode terminal 22 electrically connects the plate terminal 22c of the second electrode terminal 22 and the cap plate 20. For example, the top plate 46 is provided between the plate terminal 22c and the cap plate 20 and penetrates the rivet terminal 22a.

Therefore, the top plate 46 and the plate terminal 22c are combined to the top of the rivet terminal 22a to caulk the top so the top plate 46 and the plate terminal 22c are combined to the top of the rivet terminal 22a. The plate terminal 22c is installed outside the cap plate 20 when the top plate 46 is provided.

A short circuit hole 42 is formed on a side of a first end of the case 15 and a short circuit member 43 is installed in the short circuit hole 42. The short circuit hole 42 is formed on the side of the case 15 that is near the first electrode terminal 21, i.e. closer to the cap plate 20 than to the bottom of the case 15. In other words, the side surface of the case 15 being provided with the short circuit member 43 has a normal perpendicular to the first direction. In yet other words, the side surface of the case 15 being provided with the short circuit member 43 has a normal perpendicular to the normal of the cap plate 20.

The present invention is not restricted to the above-noted description, and the short circuit member 43 can be formed on the side of the case 15 that is near the second electrode terminal 22.

In this instance, a connecting line through the short circuit members 43 of the battery cells 101 is in parallel to the stacking direction of the battery cells 101 where the wide surfaces of the cases 15 face each other.

A groove 45 extended to an outer side of the short circuit hole 42 is formed on the outer side of the short circuit hole 42, and the groove 45 is connected to the outer side of the case 15. The short circuit member 43 is inserted into the short circuit hole 42 to extend in parallel with the side of the case 15. The short circuit member 43 having a plate shape includes a flat edge 43a and a curved portion 43b curved convexly toward the inside of the case 15 at the edge 43a. The edge 43a is inserted into the groove 45, is welded to the case 15, and is electrically connected to the case 15, and the case 15 is electrically charged to the positive polarity and the short circuit member 43 is also electrically charged to the positive polarity.

When the rechargeable battery 101 stands so that the first and second electrode terminals 21 and 22 face upwards, the short circuit member 43 stands or extends in the direction of gravity. In other words, a force being exerted from the inside of the battery on the short circuit member 43 may be perpendicular to the direction of gravity. The short circuit member 43 is electrically connected to the short circuit connector electrically charged to the negative polarity by a reversal transformation. In the present exemplary embodiment, the short circuit connector is formed with the module frame 80.

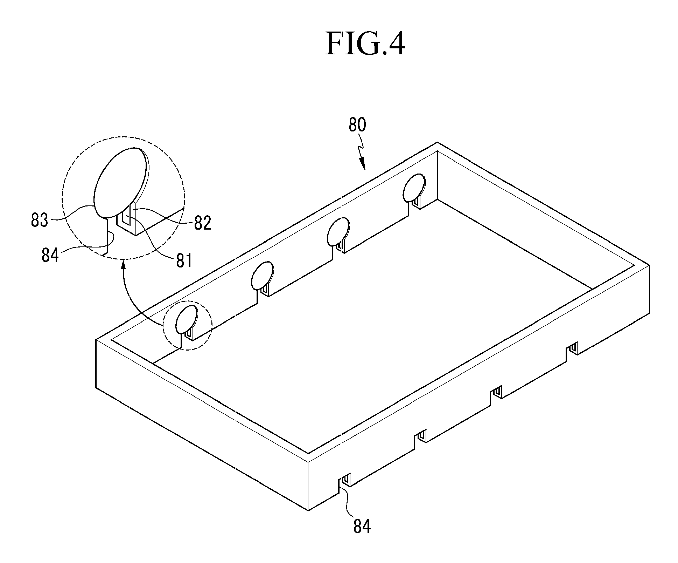

FIG. 4 is a perspective view of a module frame according to a first exemplary embodiment of the present invention.

An end plate 91 (see FIG. 1) is disposed on the rechargeable battery 101 disposed on a side end of a first end from among the stacked rechargeable batteries 101, and optionally an end plate 92 (see FIG. 1) is disposed on a side end of a second end. Also, the module frame 80 is disposed to wrap the rechargeable batteries 101 and the optional end plates 91 and 92. The module frame 80 is formed to have a square shape disposed to face the side of the rechargeable battery 101, and partially wraps an external circumference of the rechargeable battery 101.

The module frame 80 includes a conductor 81 made of a material with electrical conductivity and an insulating layer 82 wrapping the conductor 81. The conductor 81 is made of a metal with electrical conductivity and is continuously disposed along a length direction of the module frame 80. The insulating layer 82 is formed to wrap the conductor 81, and an opening 83 without an insulating layer 82 is formed in the module frame 80. The opening 83 is formed at a part to face the short circuit member 43 so the conductor 81 is exposed to directly face the short circuit member 43.

A cutout 84 extended to the bottom is provided on the module frame 80. The cutout 84 is formed from the exposed conductor 81 to the bottom of the module frame 80, and it has a predetermined width. When the cutout 84 is formed, moisture condensed at the exposed conductor 81 can be drawn down along the cutout 84.

Also, the module frame 80 is electrically connected to the first electrode terminal 21 of the rechargeable battery 101 disposed to the outermost part with an intermediate connecting member 75 as a medium. The intermediate connecting member 75 is electrically connected to the first electrode terminal 21 combined to the first module terminal 72.

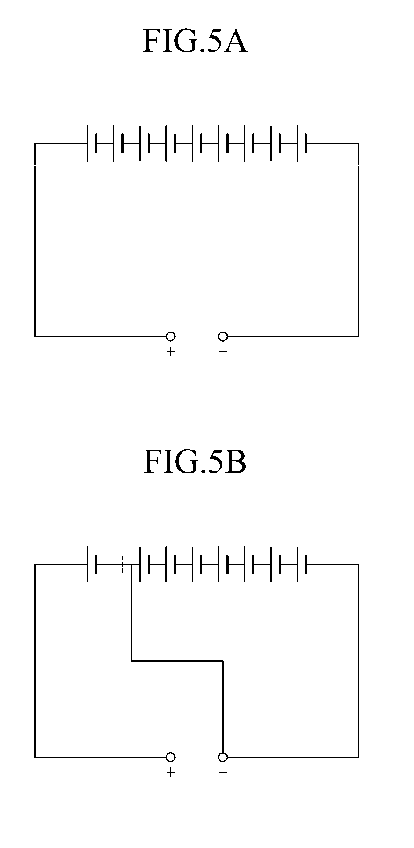

FIG. 5A is a circuit diagram of a battery module according to a first exemplary embodiment of the present invention, and FIG. 5B is a circuit diagram when a short circuit member electrically contacts a module frame in a battery module according to a first exemplary embodiment of the present invention.

As shown in FIG. 5A, before the short circuit member 43 is operated, the rechargeable batteries 101 are coupled in series.

When an internal pressure of the rechargeable battery 101 is increased, the short circuit member 43 is reversely transformed to be convex toward the outer side, and when the short circuit member 43 is reversely transformed, the short circuit member 43 is electrically connected to the module frame 80. Hence, the case 15 electrically charged to the positive polarity is electrically connected to the module frame 80 electrically charged to the negative polarity.

As shown in FIG. 5B, when the case 15 of the rechargeable battery is electrically connected to the module frame 80, a short circuit is generated to discharge a current, and the current is drawn out to the second module terminal 73 through the module frame 80. The current does not flow to the rechargeable battery 101 that is installed after the short-circuited rechargeable battery 101, and the current is bypassed through the module frame 80.

According to the present exemplary embodiment, a short circuit occurs by a contact of the module frame 80 and the short circuit member 43 so no current flows to the rechargeable battery 101 that is installed after the short circuit is generated and therefore safety is improved.

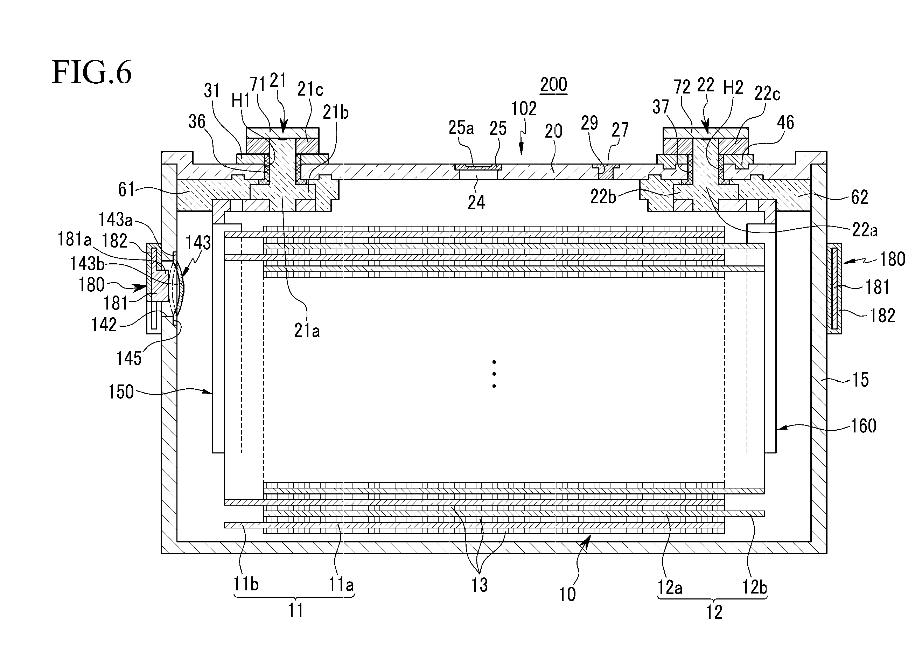

FIG. 6 is a cross-sectional view of a battery module according to a second exemplary embodiment of the present invention.

Referring to FIG. 6, the battery module 200 includes a plurality of rechargeable batteries 102, a bus bar 71 for electrically connecting first electrode terminals 21 and second electrode terminals 22 of the neighboring rechargeable batteries 102, and a module frame 180 wrapping external circumferences of the rechargeable batteries 102.

The rechargeable batteries 102 are stacked along a first direction , the rechargeable batteries 102 include the first electrode terminals 21 and the second electrode terminals 22, and while the first electrode terminals 21 and the second electrode terminals 22 are alternately disposed, the bus bar 71 is bonded to the terminals through welding and the rechargeable batteries 102 are coupled in series.

Each rechargeable battery 102 includes an electrode assembly 10 including a first electrode (negative electrode) 11 and a second electrode (positive electrode) 12, a case 15 receiving the electrode assembly 10, a cap plate 20 combined to an opening of the case 15, and a first electrode terminal 21 and a second electrode terminal 22 installed in the cap plate 20.

The rechargeable battery 102 according to the second exemplary embodiment has the same configuration as the rechargeable battery according to the first exemplary embodiment except for the installation configuration of a short circuit member 143, the configuration of the short circuit connection member or module frame 180 and the configuration of a negative electrode lead tab 150 and a positive electrode lead tab 160 so no repeated description on the same configurations will be provided.

The negative electrode lead tab 150 electrically connects the first electrode terminal 21 to the first electrode 11 of the electrode assembly 10, and the positive electrode lead tab 160 electrically connects the second electrode terminal 22 to the second electrode 12 of the electrode assembly 10.

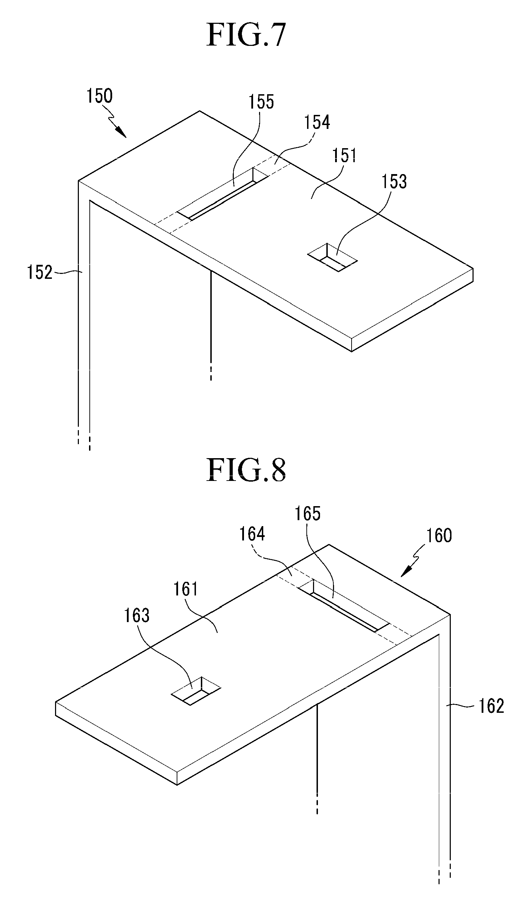

As shown in FIG. 7, the negative electrode lead tab 150 includes a terminal connecting portion 151 attached to the first electrode terminal 21 through welding, and an electrode connecting portion 152 bent and formed at the terminal connecting portion 151 and attached to the negative electrode 11 through welding. A support hole 153 into which a bottom of a rivet terminal 21a is inserted is formed in the terminal connecting portion 151, and the rivet terminal 21a and the negative electrode lead tab 150 are bonded through welding. Further, a fuse 154 that has a smaller cross-section than other parts and is transformed when an overcurrent flows thereto is formed on the negative electrode lead tab 150.

A fuse hole 155 is formed in the fuse 154 so the fuse 154 is formed to have a smaller cross-section than other parts, and when flow of the current is increased and an overcurrent exceeding a limit current flows, the fuse 154 is melted to intercept electrical connection between the electrode assembly 10 and the first electrode terminal 21.

As shown in FIG. 8, the positive electrode lead tab 160 includes a terminal connecting portion 161 attached to the second electrode terminal 22 through welding, and an electrode connecting portion 162 bent and formed at the terminal connecting portion 161 and attached to the positive electrode 12 through welding. A support hole 163 into which a bottom of a rivet terminal 21a is inserted is formed in the terminal connecting portion 161, and the rivet terminal 21a and the positive electrode lead tab 160 are bonded through welding. Further, a fuse 164 that has a smaller cross-section than other parts and is transformed when an overcurrent flows is formed on the positive electrode lead tab 160.

A fuse hole 165 is formed in the fuse 164 and the fuse 164 has a smaller cross-section than other parts, and when a flow of the current is increased and an overcurrent exceeding the limit current flows, the fuse 164 is melted to intercept electrical connection between the electrode assembly 10 and the second electrode terminal 22.

A short circuit hole 142 is formed in a first end of the case 15, and a short circuit member 143 is installed in the short circuit hole 142. The short circuit hole 142 is formed on a side of the case 15 that is near the first electrode terminal 21. However, the present invention is not restricted thereto, and the short circuit member 143 can be formed on the side of the case 15 that is near the second electrode terminal 22. A groove 145 extended inside the short circuit hole 142 is formed in the outer side of the short circuit hole 142, and the groove 145 is connected to the inside of the case 15.

The short circuit member 143 is inserted in the short circuit hole 142 and is installed to stand in parallel with the side of the case 15. The short circuit member 43 having a plate shape include a flat edge 143a and a curved portion 143b that is curved in a convex manner toward the inside of the case 15 from the edge 143a. The edge 143a is inserted into the groove 145, it is welded to the case 15 electrically connected to the positive electrode, and it is electrically connected to the case 15 so the case 15 is electrically charged to the positive polarity and the short circuit member 43 is electrically charged to the positive polarity.

As described, when the rechargeable battery 102 stands so that the first and second electrode terminals 21 and 22 face upwards, the short circuit member 143 is installed to extend or stand in the gravity direction. The short circuit member 143 is electrically connected to the negatively charged short circuit connector by reversal transformation. In the present exemplary embodiment, the short circuit connector is configured with a module frame 180.

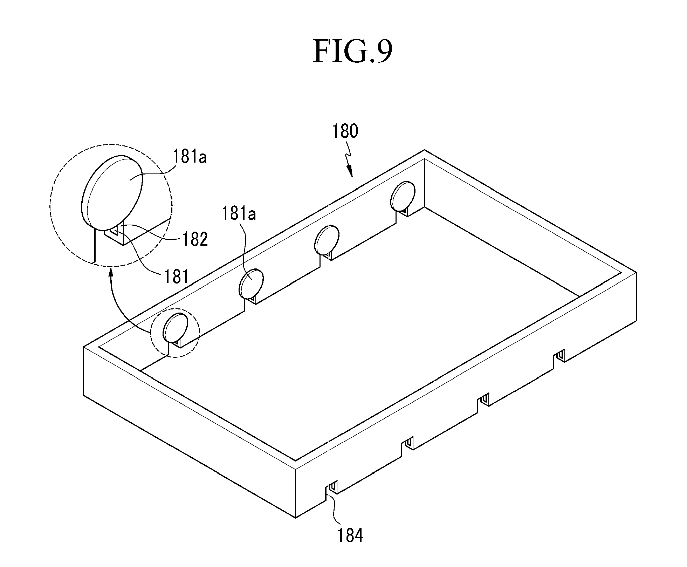

FIG. 9 is a perspective view of a module frame according to a second exemplary embodiment of the present invention.

Referring to FIG. 9, the module frame 180 is formed to have a square shape that is disposed to face the side of the rechargeable battery 102, and it partially wraps the external circumference of the rechargeable battery 102.

The module frame 180 includes a conductor 181 made of a material with electrical conductivity and an insulating layer 182 wrapping the conductor 181. The conductor 181 is made of a metal with electric conductivity, and is continuously disposed along the length direction of the module frame 180. In a like manner of the first exemplary embodiment, the conductor 181 is electrically connected to the negative electrode.

The insulating layer 182 is formed to wrap the conductor 181, and a short circuit protrusion 181a protruded to the outer part of the insulating layer 182 is formed on the conductor 181. The short circuit protrusion 181a is formed on a part that faces the short circuit member 143 so the short circuit protrusion 181a is exposed to directly face the short circuit member 143.

In addition, a cutout 184 extended to the bottom is formed on the module frame 180. The cutout 184 is formed to reach the bottom of the module frame 180 from the bottom of the exposed short circuit protrusion 181a, and it has a predetermined width. When the cutout 184 is formed according to the present exemplary embodiment, moisture condensed at the exposed conductor 181 can be discharged down along the cutout 184 because of gravity.

When an internal pressure of the rechargeable battery 102 is increased, the short circuit member 143 is reversely transformed to be convex toward the outer side, and when the short circuit member 143 is reversely transformed, the short circuit member 143 is electrically connected to the module frame 180.

Also, as shown in FIG. 7 and FIG. 8, fuses 154 and 164 are formed on the negative electrode lead tab 150 and the positive electrode lead tab 160 so when a short circuit is generated and a large current flows, the fuses 154 and 164 are melted to intercept the current. Hence, the rechargeable battery 102 touching a short circuit connecting member 260 becomes a neutral battery and acquires safety.

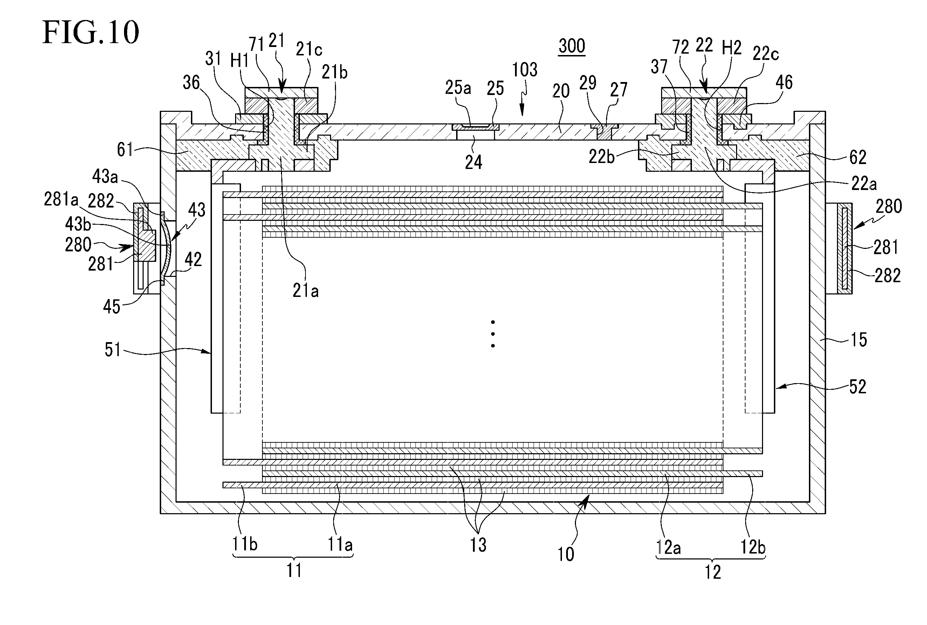

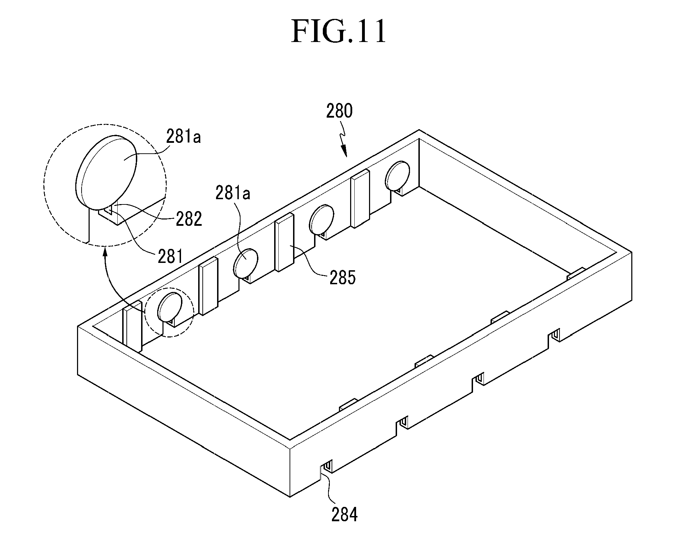

FIG. 10 is a cross-sectional view of a battery module according to a third exemplary embodiment of the present invention, and FIG. 11 is a perspective view of a module frame according to the third exemplary embodiment of the present invention.

Referring to FIG. 10 and FIG. 11, the battery module 300 includes a plurality of rechargeable batteries 103, a bus bar 71 for electrically connecting first electrode terminals 21 and second electrode terminals 22 of the neighboring rechargeable batteries 103, and a module frame 280 wrapping external circumferences of the rechargeable batteries 103.

The rechargeable battery 103 includes an electrode assembly 10 including a first electrode (negative electrode) 11 and a second electrode (positive electrode) 12, a case 15 for receiving the electrode assembly 10, a cap plate 20 combined to an opening of the case 15, and a first electrode terminal 21 and a second electrode terminal 22 installed in the cap plate 20.

The rechargeable battery 103 according to the third exemplary embodiment has the same configuration as the rechargeable battery according to the first exemplary embodiment except the installation configuration of the short circuit member 43 together with the module frame 280 so the repeated description of the same configuration will be omitted.

The rechargeable batteries 103 are stacked, they include the first electrode terminals 21 and the second electrode terminals 22, and they are coupled in series when the bus bar 71 is bonded to the terminals through welding while the first electrode terminals 21 and the second electrode terminals 22 are alternately disposed.

A short circuit hole 42 is formed in a side of a first end of the case 15, and a short circuit member 43 is installed in the short circuit hole 42. The short circuit hole 42 is formed on the case of the case 15 that is near the first electrode terminal 21. A groove 45 extended inside the short circuit hole 42 is formed on the outer part of the short circuit hole 42, and it is connected to the outer side of the case 15.

The short circuit member 43 is inserted into the short circuit hole 42 and is installed to stand in parallel with the side of the case 15. The short circuit member 43 having a plate shape includes a flat edge 43a and a curved portion 43b that is curved in a convex manner toward the inside of the case 15 from the edge 43a. The edge 43a is inserted into the groove 45, it is welded to the case 15 electrically connected to the positive electrode, and it is electrically connected to the case 15 so the case 15 is electrically charged to the positive polarity and the short circuit member 43 is electrically charged to the positive polarity.

As described, when the rechargeable battery 103 stands so that the first and second electrode terminals 21 and 22 face upwards, the short circuit member 43 is installed to stand or extend in the gravity direction. The short circuit member 43 is electrically connected to the negatively charged short circuit connector by reversal transformation. In the present exemplary embodiment, the short circuit connector is configured with a module frame 280.

The module frame 280 is formed to be a square disposed to face the side of the rechargeable battery 103, and it partially wraps the external circumference of the rechargeable battery 103.

The module frame 280 includes a conductor 281 made of a material with electrical conductivity and an insulating layer 282 wrapping the conductor 281. The conductor 281 is made of a metal with electric conductivity, and it is disposed in the length direction of the module frame 280. In a like manner of the first exemplary embodiment, the conductor 281 is electrically connected to the negative electrode.

The insulating layer 282 is formed to wrap the conductor 281, and a short circuit protrusion 281a protruded to the outer part of the insulating layer 282 is formed on the conductor 281. The short circuit protrusion 281a is formed at a part facing the short circuit member 43 so the short circuit protrusion 281a is exposed to directly face the short circuit member 43.

A support protrusion 285 is formed on the side facing the case 15 in the insulating layer 282, and the support protrusion 285 is disposed between the short circuit protrusions 281a to separate the short circuit protrusion 281a from the case 15. The support protrusion 285 is formed in the height direction of the module frame 280.

A cutout 284 extended to the bottom is formed in the module frame 280. The cutout 284 is formed to reach the bottom of the module frame 280 from the exposed short circuit protrusion 281 a, and it has a predetermined width. When the cutout 284 is formed according to the present exemplary embodiment, moisture condensed to the exposed conductor 181 can be drawn down along the cutout 284 because of gravity.

When the short circuit protrusion 281a is formed on the conductor 281 and the support protrusion 285 is used to separate the short circuit protrusion 281a, a concavity is not formed between the short circuit member 43 and the module frame 280 so condensation and storage of moisture is prevented.

When an internal pressure of the rechargeable battery 103 is increased, the short circuit member 43 is transformed to be convex, and the short circuit member 43 is electrically connected to the module frame 280.

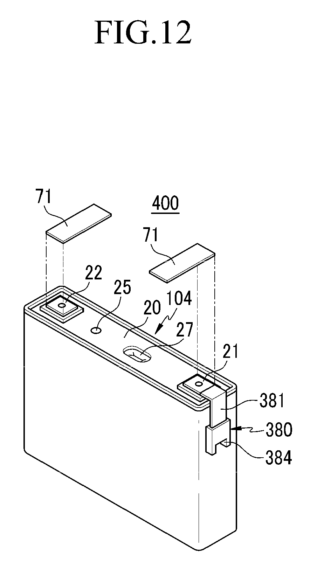

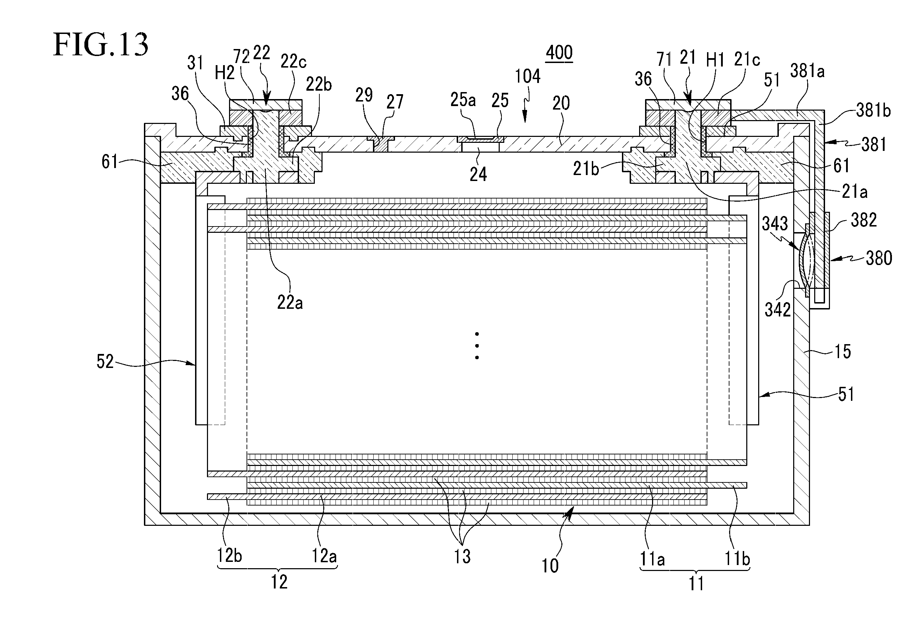

FIG. 12 is a perspective view of a battery module with only one battery cell according to a fourth exemplary embodiment of the present invention, and FIG. 13 is a cross-sectional view of a battery module according to a fourth exemplary embodiment of the present invention. Though only one battery cell is shown in Fig. 12 and 13, a plurality of battery cells of Fig. 12 and 13 may be provided stacked along a first direction to form a battery module.

Referring to FIG. 12 and FIG. 13, the battery module 400 includes a plurality of rechargeable batteries 104, and a bus bar 71 for electrically connecting first electrode terminals 21 and second electrode terminals 22 of the neighboring rechargeable batteries 104.

The rechargeable battery 104 includes an electrode assembly 10 including a first electrode (negative electrode) 11 and a second electrode (positive electrode) 12, a case 15 for receiving the electrode assembly 10, a cap plate 20 installed in an opening of the case 15, and a first electrode terminal 21 and a second electrode terminal 22 installed in the cap plate 20.

The rechargeable battery 104 according to the fourth exemplary embodiment has the same configuration as the battery module according to the first exemplary embodiment except for the installation configuration of a short circuit connector 380.

A short circuit hole 342 is formed on the side of the first end of the case 15, and a short circuit member 343 is installed in the short circuit hole 342. The short circuit hole 342 is formed on the side of the case 15 that is near the first electrode terminal 21. The short circuit member 343 is inserted into the short circuit hole 342 and is installed to stand in parallel with the side of the case 15.

The short circuit member 343 is formed with a circular plate shape with a curved portion that is curved to be convex toward the inside of the case 15. The short circuit member 343 is inserted into the groove formed in the short circuit hole 342, it is welded to the case 15, and it is electrically connected to the case 15. The case 15 is electrically charged to the positive polarity, and the short circuit member 343 is electrically charged to the positive polarity.

When the rechargeable battery 104 stands so that the first and second electrode terminals 21 and 22 face upwards, the short circuit member 343 stands in the gravity direction. The short circuit member 343 is electrically connected to the short circuit connector 380 that is negatively charged by reversal transformation.

The short circuit connector 380 includes a conductor 381 fixed to the first electrode terminal 21 through welding and an insulating layer 382 wrapping the conductor 381. The conductor 381 includes a top plate 381a made of a metal with electrical conductivity and disposed in parallel with the cap plate 20, and a side plate 381 b bent from the top plate 381 a and disposed in parallel with the side of the case 15.

The top plate 381a is fixed to the side end of the first electrode terminal 21 through welding, and the side plate 381 b is separated from the short circuit member 343 and is disposed to face the short circuit member 343. The insulating layer 382 is installed to partially wrap the bottom of the conductor 381, and it separates the conductor 381 from the side of the case 15. At a part of the short circuit connector 380 toward the short circuit member 343, the insulating layer 382 is not formed and the conductor 381 is exposed. Therefore, the conductor 381 can be installed to directly face the short circuit member 343.

A cutout 384 extended to the bottom is formed on the short circuit connector 380. The cutout 384 is formed to reach the bottom of the short circuit connector 380 from the exposed conductor 381, and it has a predetermined width. When the cutout 384 is formed according to the present exemplary embodiment, moisture condensed to the exposed conductor 381 can be drawn down along the cutout 384 by gravity.

When an internal pressure of the rechargeable battery 104 is increased, the short circuit member 343 is reversely transformed to be convex toward the outer side, and the short circuit member 343 is electrically connected to the short circuit connector 380. Accordingly, the positively charged short circuit member 343 and the negatively charged short circuit connector 380 generate a short circuit.

The short circuit connector 380 according to the present exemplary embodiment is not configured with a module frame and it is fixedly installed in the first electrode terminal 21 of each rechargeable battery 104 to generate a short circuit on the rechargeable battery 104.

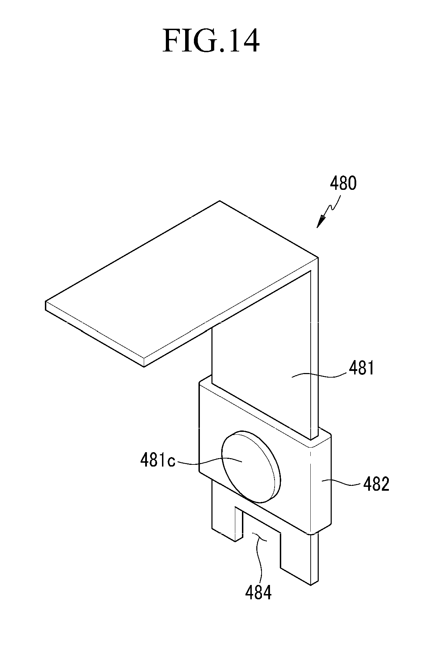

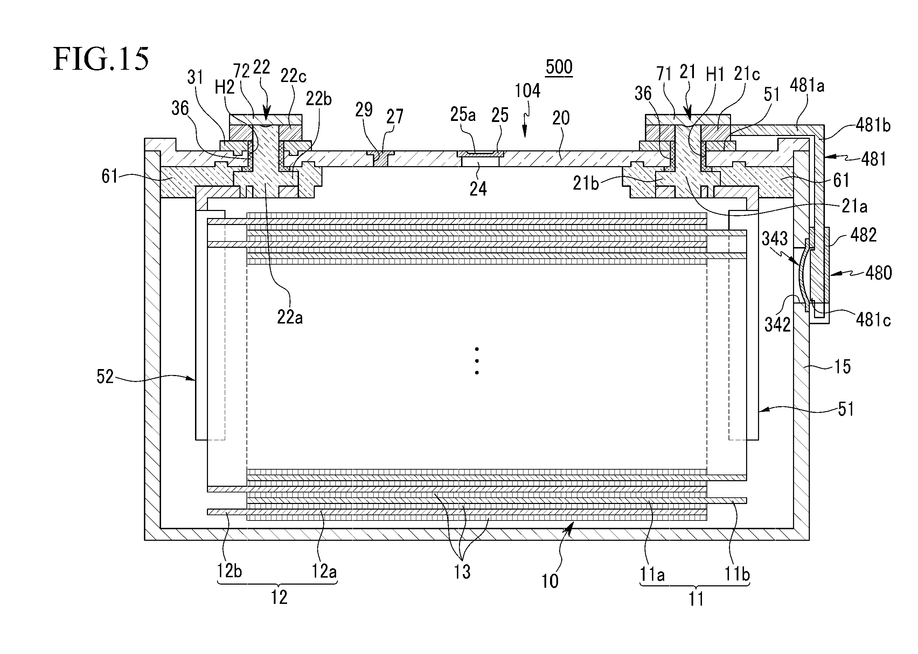

Fig. 14 is a perspective view of a short circuit connector 480 according to a fifth exemplary embodiment of the present invention. Fig. 15 is a perspective view of the battery module 500 with a short circuit connector 480 of Fig. 14.

Referring to FIG. 14 and FIG. 15, the battery module 500 includes a plurality of rechargeable batteries 104, and a bus bar 71 for electrically connecting first electrode terminals 21 and second electrode terminals 22 of the neighboring rechargeable batteries 104.

The rechargeable battery 104 according to the fifth exemplary embodiment has the same configuration as the battery module according to the fourth exemplary embodiment except for the installation configuration of a short circuit connector 480. Since the only difference between the battery module 400 of Fig. 13 and the battery module 500 of Fig. 15 is the form of the short circuit connector 480, the description of the other elements of the battery module 500 apart of the short circuit connector 480 is not repeated here but can be found in the description of Fig. 13.

The short circuit connector 480 includes a conductor 481 fixed to the first electrode terminal 21 through welding and an insulating layer 482 wrapping the conductor 481. The conductor 381 includes a top plate 481a made of a metal with electrical conductivity and disposed in parallel with the cap plate 20, and a side plate 481 b bent from the top plate 481 a and disposed in parallel with the side of the case 15.

The top plate 481a is fixed to the side end of the first electrode terminal 21 through welding, and the side plate 481 b is separated from the short circuit member 343 and is disposed to face the short circuit member 343. The insulating layer 482 is installed to partially wrap the bottom of the conductor 481, and it separates the conductor 481 from the side of the case 15. At a part of the short circuit connector 480 toward the short circuit member 343, the insulating layer 482 is not formed and the conductor 481 is exposed. Therefore, the conductor 481 can be installed to directly face the short circuit member 343.

A cutout 484 extended to the bottom is formed on the short circuit connector 480. The cutout 484 is formed to reach the bottom of the short circuit connector 480 from the conductor 481, and it has a predetermined width. When the cutout 484 is formed according to the present exemplary embodiment, moisture condensed to the exposed conductor 481 can be drawn down along the cutout 484 by gravity.

The connection member 480 of Fig. 14 is provided with a short circuit protrusion 481c located vertically above the cutout 484 and protruding to the outer part of the insulating layer 482 formed on the short circuit connector 480 between the short circuit connector 480 and the case 15. Thus, the short circuit protrusion 481c is not covered with the insulating layer 482. The short circuit protrusion 481c is formed on a part that faces the short circuit member 343 so the short circuit protrusion 481c is exposed to directly face the short circuit member 343. The short circuit protrusion 481c protrudes from the short circuit connector 480 into the short circuit hole 342 towards the short circuit member 343, thus decreasing the distance between the short circuit connector 480 and the short circuit member 343. This allows the short between the short circuit connector 480 and the short circuit member 343 to be more rapidly established upon an increase of internal pressure inside the battery case 15. Consequently, when an internal pressure of the rechargeable battery 104 is increased, the short circuit member 343 is reversely transformed to be convex toward the outer side, and the short circuit member 343 is electrically connected to the short circuit connector 480. Accordingly, the positively charged short circuit member 343 and the negatively charged short circuit connector 480 generate a short circuit.

The short circuit connector 480 according to the present exemplary embodiment is not configured with a module frame and it is fixedly installed in the first electrode terminal 21 of each rechargeable battery 104 to generate a short circuit on the rechargeable battery 104.

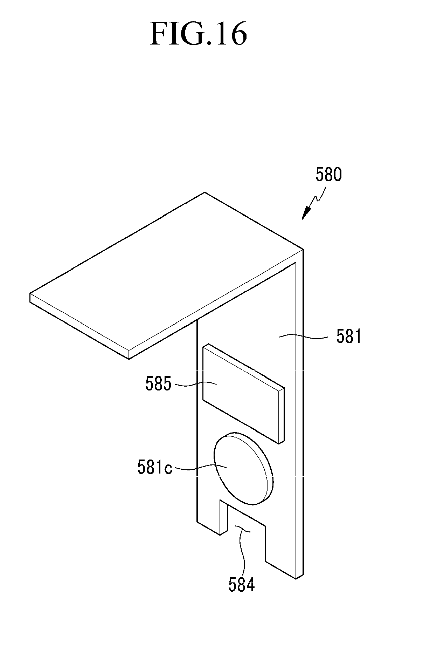

Fig. 16 is a perspective view of a short circuit connection member 580 according to a sixth exemplary embodiment of the present invention. The only difference between the short circuit connector 480 of Fig. 14 and the short circuit connector 580 of Fig. 16 is the support protrusion 585. Thus, description of the like elements is omitted here. The support protrusion 585 is formed on the side of the short circuit connector 580 facing the case 15 in the insulating layer 582. The support protrusion 585 is disposed vertically above the short circuit protrusions 581c to separate the short circuit protrusion 581c from the case 15 and to insulate the short circuit connector 580 from the case 15.

## Claims

1. A rechargeable battery module comprising:
at least one battery cell (101) comprising:
an electrode assembly (10) having a first electrode (11) and a second electrode (12),
a case (15) for accommodating the electrode assembly (10) therein,
a cap plate (20) for closing an opening of the case (15), and
a short circuit connector (380) provided being electrically connected to the first electrode (11) of the battery cell (101), and
a short circuit member (343) electrically connected to the second electrode (12) and provided on a side surface of the case (15), the short circuit member (343) having a first state being spaced apart from the short circuit connector (80) and a second state being in contact with the short circuit connector (80),
**characterized in that**
the short circuit connector (380) is provided with a cutout (384) extending from the bottom of the short circuit connector (380).

2. The rechargeable battery module of claim 1, wherein the short circuit connector (380) comprises a conductor (381) and an insulating layer (382) wrapping the conductor (381).

3. The rechargeable battery module of claim 2, wherein the cutout (384) exposes a part of the conductor (381).

4. The rechargeable battery module of claim 2 or 3, wherein the short circuit connector (80) further comprises an opening (383) exposing the conductor (381) on a side and location of the short circuit connector (380) facing the short circuit member (343).

5. The rechargeable battery module of claim 4, wherein the cutout (384) extends towards the opening (383), preferably the cutout (384) and opening (383) being connected.

6. The rechargeable battery module of one of the claims 4 or 5, wherein the short circuit connector (380) comprises a short circuit protrusion (381a) of the conductor (381) protruding through the opening (383) towards the short circuit member (343).

7. The rechargeable battery module of one of claim 6, wherein the short circuit connector (380) further comprises a support protrusion (385) formed on a side of the short circuit connector (380) facing the battery cell (101) to separate the short circuit protrusion (381 a) from the battery cell (101).

8. The rechargeable battery module of one of the previous claims, wherein a plurality of battery cells (101) is provided, the battery cells (101) being stacked along a first direction, wherein the short circuit connector (80) surrounds the plurality of battery cells (101) and is electrically connected to an outermost battery cell (101).

9. The rechargeable battery module of claim 8, wherein the side surface of the case (15) being provided with the short circuit member (43) has a normal perpendicular to the first direction.

10. The rechargeable battery module of claims 8 or 9, wherein the side surface of the case (15) being provided with the short circuit member (43) has a normal perpendicular to the normal of the cap plate (20).

11. The rechargeable battery module of one of claims 8 to 10, wherein the short circuit connector (80) is located on an exterior surface of the battery cells (101) facing the short circuit members (43) of each of the battery cells (101).

12. The rechargeable battery module of claims 8 to 11, wherein the short circuit connector (80) has the shape of a rectangular frame, extending in a plane parallel to the cap plates (20) of the plurality of battery cells (101).

13. The rechargeable battery module of one of the preceding claims, wherein the short circuit member (43) is in communication with the inside of its case (15).

14. The rechargeable battery module of one of the preceding claims, wherein the short circuit member (43) has a plate shape with a flat edge (43a) and a curved portion (43b) protruding towards the interior of the case (15).

15. The rechargeable battery module of claim 14, wherein the short circuit member (43) is installed in a short circuit hole (42) provided in the respective side surface of the case (15), the short circuit hole (42) being preferably surrounded by a groove (45) and the flat edge (43a) of the short circuit member (43) is inserted into the groove (45).

## Patentansprüche

1. Wiederaufladbares Batteriemodul, umfassend:
wenigstens eine Batteriezelle (101), umfassend:
eine Elektrodenbaugruppe (10), die eine erste Elektrode (11) und eine zweite Elektrode (12) aufweist,
ein Gehäuse (15) zur Aufnahme der Elektrodenbaugruppe (10) darin,
eine Deckelplatte (20) zum Verschließen einer Öffnung des Gehäuses (15) und
ein Kurzschlussverbindungsstück (380), das elektrisch mit der ersten Elektrode (11) der Batteriezelle (101) verbunden vorgesehen ist, und
ein Kurzschlusselement (343), das elektrisch mit der zweiten Elektrode (12) verbunden ist und auf einer Seitenfläche des Gehäuses (15) vorgesehen ist, wobei das Kurzschlusselement (343) einen von dem Kurzschlussverbindungsstück (80) beabstandeten ersten Zustand und einen in Kontakt mit dem Kurzschlussverbindungsstück (80) stehenden zweiten Zustand aufweist,
**dadurch gekennzeichnet, dass**
das Kurzschlussverbindungsstück (380) mit einer vom Boden des Kurzschlussverbindungsstücks (380) ausgehenden Ausnehmung (384) versehen ist.

2. Wiederaufladbares Batteriemodul nach Anspruch 1, wobei das Kurzschlussverbindungsstück (380) einen Leiter (381) und eine den Leiter (381) umschließende Isolierschicht (382) umfasst.

3. Wiederaufladbares Batteriemodul nach Anspruch 2, wobei die Ausnehmung (384) einen Teil des Leiters (381) freilegt.

4. Wiederaufladbares Batteriemodul nach Anspruch 2 oder 3, wobei das Kurzschlussverbindungsstück (80) weiterhin eine Öffnung (383) umfasst, die den Leiter (381) auf einer Seite und an einer Position des Kurzschlussverbindungsstücks (380) freilegt, die dem Kurzschlusselement (343) zugewandt sind.

5. Wiederaufladbares Batteriemodul nach Anspruch 4, wobei sich die Ausnehmung (384) zu der Öffnung (383) hin erstreckt, wobei die Ausnehmung (384) und die Öffnung (383) vorzugsweise verbunden sind.

6. Wiederaufladbares Batteriemodul nach einem der Ansprüche 4 oder 5, wobei das Kurzschlussverbindungsstück (380) einen Kurzschlussvorsprung (381a) des Leiters (381) umfasst, der durch die Öffnung (383) hindurch zu dem Kurzschlusselement (343) hin vorspringt.

7. Wiederaufladbares Batteriemodul nach Anspruch 6, wobei das Kurzschlussverbindungsstück (380) weiterhin einen Stützvorsprung (385) umfasst, der auf einer der Batteriezelle (101) zugewandten Seite des Kurzschlussverbindungsstücks (380) ausgebildet ist, um den Kurzschlussvorsprung (381a) von der Batteriezelle (101) zu trennen.

8. Wiederaufladbares Batteriemodul nach einem der vorangehenden Ansprüche, wobei eine Mehrzahl von Batteriezellen (101) vorgesehen ist, wobei die Batteriezellen (101) entlang einer ersten Richtung gestapelt sind, wobei das Kurzschlussverbindungsstück (80) die Mehrzahl von Batteriezellen (101) umgibt und elektrisch mit einer äußersten Batteriezelle (101) verbunden ist.

9. Wiederaufladbares Batteriemodul nach Anspruch 8, wobei die mit dem Kurzschlusselement (43) versehene Seitenfläche des Gehäuses (15) eine Normale senkrecht zur ersten Richtung aufweist.

10. Wiederaufladbares Batteriemodul nach Anspruch 8 oder 9, wobei die mit dem Kurzschlusselement (43) versehene Seitenfläche des Gehäuses (15) eine Normale senkrecht zur Normalen der Deckelplatte (20) aufweist.

11. Wiederaufladbares Batteriemodul nach einem der Ansprüche 8 bis 10, wobei sich das Kurzschlussverbindungsstück (80) auf einer Außenfläche der Batteriezellen (101) befindet, die den Kurzschlusselementen (43) jeder der Batteriezellen (101) zugewandt ist.

12. Wiederaufladbares Batteriemodul nach Anspruch 8 bis 11, wobei das Kurzschlussverbindungsstück (80) die Form eines rechteckigen Rahmens aufweist, der sich in einer Ebene parallel zu den Deckelplatten (20) der Mehrzahl von Batteriezellen (101) erstreckt.

13. Wiederaufladbares Batteriemodul nach einem der vorangehenden Ansprüche, wobei das Kurzschlusselement (43) mit dem Inneren seines Gehäuses (15) in Verbindung steht.

14. Wiederaufladbares Batteriemodul nach einem der vorangehenden Ansprüche, wobei das Kurzschlusselement (43) eine Plattenform mit einer flachen Kante (43a) und einem zum Inneren des Gehäuses (15) hin vorspringenden gebogenen Abschnitt (43b) aufweist.

15. Wiederaufladbares Batteriemodul nach Anspruch 14, wobei das Kurzschlusselement (43) in einem in der jeweiligen Seitenfläche des Gehäuses (15) vorgesehenen Kurzschlussloch (42) installiert ist, wobei das Kurzschlussloch (42) vorzugsweise von einer Nut (45) umgeben ist, und die flache Kante (43a) des Kurzschlusselements (43) in die Nut (45) eingesetzt ist.

## Revendications

1. Module de batterie rechargeable comprenant :
au moins une cellule de batterie (101) comprenant :
un ensemble d'électrodes (10) ayant une première électrode (11) et une deuxième électrode (12),
un boîtier (15) pour recevoir l'ensemble d'électrodes (10) à l'intérieur de celui-ci,
une plaque de capuchon (20) pour fermer une ouverture du boîtier (15), et
un connecteur de court-circuit (380) prévu en étant électriquement relié à la première électrode (11) de la cellule de batterie (101), et
un élément de court-circuit (343) électriquement relié à la deuxième électrode (12) et prévu sur une surface latérale du boîtier (15), l'élément de court-circuit (343) ayant un premier état qui est espacé du connecteur de court-circuit (80) et un deuxième état qui est en contact avec le connecteur de court-circuit (80),
**caractérisé en ce que**
le connecteur de court-circuit (380) est pourvu d'une découpe (384) s'étendant à partir de la partie inférieure du connecteur de court-circuit (380).

2. Module de batterie rechargeable de la revendication 1, dans lequel le connecteur de court-circuit (380) comprend un conducteur (381) et une couche isolante (382) enveloppant le conducteur (381).

3. Module de batterie rechargeable de la revendication 2, dans lequel la découpe (384) expose une partie du conducteur (381).

4. Module de batterie rechargeable de la revendication 2 ou 3, dans lequel le connecteur de court-circuit (80) comprend en outre une ouverture (383) exposant le conducteur (381) sur un côté et l'emplacement du connecteur de court-circuit (380) faisant face à l'élément de court-circuit (343).

5. Module de batterie rechargeable de la revendication 4, dans lequel la découpe (384) s'étend vers l'ouverture (383), de préférence la découpe (384) et l'ouverture (383) étant reliées.

6. Module de batterie rechargeable de l'une des revendications 4 ou 5, dans lequel le connecteur de court-circuit (380) comprend une saillie de court-circuit (381a) du conducteur (381) faisant saillie à travers l'ouverture (383) vers l'élément de court-circuit (343).

7. Module de batterie rechargeable de la revendication 6, dans lequel le connecteur de court-circuit (380) comprend en outre une saillie de support (385) formée sur un côté du connecteur de court-circuit (380) faisant face à la cellule de batterie (101) pour séparer la saillie de court-circuit (381a) de la cellule de batterie (101).

8. Module de batterie rechargeable de l'une des revendications précédentes, dans lequel une pluralité de cellules de batterie (101) est prévue, les cellules de batterie (101) étant empilées le long d'une première direction, où le connecteur de court-circuit (80) entoure la pluralité de cellules de batterie (101) et est électriquement relié à la cellule de batterie la plus à l'extérieur (101).

9. Module de batterie rechargeable de la revendication 8, dans lequel la surface latérale du boîtier (15) qui est pourvue de l'élément de court-circuit (43) a une normale perpendiculaire à la première direction.

10. Module de batterie rechargeable des revendications 8 ou 9, dans lequel la surface latérale du boîtier (15) qui est pourvue de l'élément de court-circuit (43) a une normale perpendiculaire à la normale de la plaque de capuchon (20).

11. Module de batterie rechargeable de l'une des revendications 8 à 10, dans lequel le connecteur de court-circuit (80) est situé sur une surface extérieure des cellules de batterie (101) faisant face aux éléments de court-circuit (43) de chacune des cellules de batterie (101).

12. Module de batterie rechargeable des revendications 8 à 11, dans lequel le connecteur de court-circuit (80) a la forme d'un cadre rectangulaire, s'étendant dans un plan parallèle aux plaques de capuchon (20) de la pluralité de cellules de batterie (101).

13. Module de batterie rechargeable de l'une des revendications précédentes, dans lequel l'élément de court-circuit (43) est en communication avec l'intérieur de son boîtier (15).

14. Module de batterie rechargeable de l'une des revendications précédentes, dans lequel l'élément de court-circuit (43) a une forme de plaque avec un bord plat (43a) et une partie incurvée (43b) faisant saillie vers l'intérieur du boîtier (15).

15. Module de batterie rechargeable de la revendication 14, dans lequel l'élément de court-circuit (43) est installé dans un trou de court-circuit (42) prévu dans la surface latérale respective du boîtier (15), le trou de court-circuit (42) étant de préférence entouré par une rainure (45) et le bord plat (43a) de l'élément de court-circuit (43) est inséré dans la rainure (45).
